# EUROPEAN PATENT APPLICATION

(11) **EP 3 699 248 A1**
(43) Date of publication of application: **26.08.2020**
(21) Application number: 18868149.8
(22) Date of filing: 19.10.2018
(51) Int. Cl.: C09J 5/00, B32B 37/12, C09J 7/38, C09J 201/00

(54) **METHOD FOR PRODUCING ARTICLE**

(30) Priority: 20.10.2017 JP 2017203544; 04.10.2018 WO PCT/JP2018/037177
(71) Applicant: DIC Corporation, Tokyo 174-8520 (JP)
(72) Inventor: AKIYAMA Seiji, Kitaadachi-gun Saitama 362-8577 (JP); MORINO Akinori, Kitaadachi-gun Saitama 362-8577 (JP)
(74) Representative: Adam, Holger
(86) International application number: PCT/JP2018/038970
(87) International publication number: WO 2019/078347

(57) **Abstract**

The problem that the present invention is to solve is to provide a method for producing an article, by which method, in production of an article having adherends bonded to each other via an adhesive sheet, a sticking position of the adherends can be adjusted to a precisely-specified position and peeling of the adherends with time is less likely to be caused. The present invention relates to a method for producing an article having a structure in which two or more adherends are bonded via an adhesive sheet, the method including: a step [1] of sticking an adhesive sheet to one adherend to produce a laminated body; a step [2] of bringing an adhesive sheet-side surface of the laminated body into contact with the other adherend with a load in the range of 0.001 N/cm² to 10 N/cm²; a step [3] of moving the laminated body along a surface of the other adherend while applying a load in the range of 0.001 N/cm² to 10 N/cm²; and a step [4] of press-bonding the laminated body to the other adherend with a load that is twice or more the load applied in the step [3].

## Description

### Technical Field

The present invention relates to a production method that is usable in production scenes of various articles including, for example, electronic devices.

### Background Art

Adhesive sheets have been considered to be used in production scenes of various electronic devices including, for example, various displays and copiers or multifunctional printers having a copy function, a scanning function, and the like.

A known example of such an adhesive sheet is a double coated adhesive sheet which is a double coated adhesive tape in which a pressure sensitive adhesive layer is formed on each surface of a nonwoven fabric substrate, the double coated adhesive tape having an interlaminar fracture area ratio of 10% or less and having a tensile strength of 20 N/10 mm or more both in the MD (machine direction) and TD (transverse direction) (see, for example, PTL 1).

On the other hand, with increased functionality and precision of such electronic devices in recent years, in the production scenes, there has been a case where it is required to stick two or more adherends at a precisely-specified position without any slight shift.

The sticking operation is often performed by hand. When the sticking operation is performed by hand, it is difficult to fix the adherends at the precise position by one sticking operation. Thus, in general, sticking of the adherends at the specified position is achieved only after multiple re-sticking operations.

However, since conventional adhesive tapes are designed to be able to exhibit very high bonding strength for, for example, preventing falling of parts from a final product, the high bonding strength has already been exhibited at the time of such a re-sticking operation. Thus, the re-sticking operation has not been able to be efficiently performed. In addition, although a method to enable a re-sticking operation by controlling the bonding force of an adhesive tape is considered, peeling unfortunately occurs with time due to the weak bonding force. There has been no effective means to securely stick adherends at a precisely-specified position.

### Citation List

### Patent Literature

PTL 1: JP-A-2001-152111

### Summary of Invention

### Technical Problem

A problem that the present invention is to solve is to provide a method for producing an article, by which method, in production of an article having adherends bonded to each other via an adhesive sheet, a sticking position of the adherends can be adjusted to a precisely-specified position and peeling of the adherends with time is less likely to be caused.

### Solution to Problem

The present inventors have found that the above problem can be solved by sticking an adherend to an adhesive sheet through four different steps.

Specifically, the present invention relates to a method for producing an article, the article having a structure in which two or more adherends are bonded via an adhesive sheet, the method including: a step [1] of sticking the adhesive sheet to one adherend to produce a laminated body; a step [2] of bringing an adhesive sheet-side surface of the laminated body into contact with the other adherend with a load in the range of 0.001 N/cm² to 10 N/cm²; a step [3] of moving the laminated body along a surface of the other adherend while applying a load in the range of 0.001 N/cm² to 10 N/cm²; and a step [4] of press-bonding the laminated body to the other adherend with a load that is twice or more the load applied in the step [3].

### Advantageous Effects of Invention

According to the method for producing an article of the present invention, even if two or more adherends to be fixed via an adhesive sheet are members that are quite difficult to adjust a sticking position, such as adherends with curved shape surfaces, the position can be adjusted in the state where a laminated body of one adherend and the adhesive sheet is in contact with the other adherend, thus making it possible to precisely stick the two or more adherends at a precisely-specified position without any slight shift. The method can thus be suitably used for an application for adhesive fixing.

[Fig. 1] It is a schematic diagram showing a method for testing position adjustability.

[Fig. 2] It is a schematic diagram showing a method for testing adhesion.

[Fig. 3] It is a schematic diagram viewed from the above of a test piece of Example 6 after a liquid adhesive is applied.

### Description of Embodiments

The method for producing an article of the present invention is a method for producing an article, the article having a structure in which two or more adherends are bonded via an adhesive sheet, the method including: a step [1] of sticking the adhesive sheet to one adherend to produce a laminated body; a step [2] of bringing an adhesive sheet-side surface of the laminated body into contact with the other adherend with a load in the range of 0.001 N/cm² to 10 N/cm²; a step [3] of moving the laminated body along a surface of the other adherend while applying a load in the range of 0.001 N/cm² to 10 N/cm²; and a step [4] of press-bonding the laminated body to the other adherend with a load that is twice or more the load applied in the step [3].

In the method for producing an article, the steps [1], [2], [3], and [4] are preferably performed in this order, and, as needed, another step may be included before the step [1], between the step [1] and the step [2], between the step [2] and the step [3], between the step [3] and the step [4], and after the step [4].

The step [1] is a step of sticking an adhesive sheet to an adherend to produce a laminated body.

The load in the step [1] is not particularly limited, but it is preferred that the adherend and the adhesive sheet are fixed to the extent that falling does not occur, and the load is preferably 0.1 N/cm² to 200 N/cm², and preferably 0.5 N/cm² to 150 N/cm².

Note that the load used in the present invention refers to a force acting on an interface between an adherend and an adhesive sheet. More specifically, when an adherend and an adhesive sheet are press-bonded with a press, the load refers to a force acting on the adherend and the adhesive sheet by the press. Note that the load due to the weight of an adhesive sheet is generally as quite small as 0.001 N/cm² or less, and thus is considered as a value that is not to be taken into account in calculation of the load in the present invention. On the other hand, when two adherends are bonded via an adhesive sheet and are press-bonded with a press or the like, in general, one adherend and the adhesive sheet are previously sufficiently bonded to produce a laminated body, which is then placed on a surface of the other adherend and press-bonded, for example, with a press or the like. In this case, the load refers to the total of a force applied to them by a press and a force derived from the mass of the adherend constituting the laminated body. Also in this case, the load due to the weight of the adhesive sheet is generally as quite small as 0.001 N/cm² or less, and thus is considered as a value that is not to be taken into account in calculation of the load in the present invention.

The step [1] can be performed at any temperature environment, but is preferably performed in the temperature range of the assumed operation environment without any need of heating or the like which may be employed in conventional thermoplastic adhesive sheets. Specifically, the step [1] is preferably performed at a temperature in the range of - 5°C to 40°C, and more preferably in the range of 0°C to 35°C.

In the step [1], the time during which the adherend is press-bonded to the adhesive sheet may be appropriately set in the operation process, but the load is preferably applied over 1 second or longer for temporarily fixing the article. On the other hand, since the time during which the load is applied is desirably not too long for increasing the production efficiency of the article, the time for press-bonding is preferably from 1 second to 30 seconds, more preferably from 3 seconds to 25 seconds, and further preferably from 5 seconds to 20 seconds.

In the step [1], examples of methods for press-bonding the adherend and the adhesive sheet include methods using a commercially available press, a finger pressure, a pressure roller, and a weight of a prescribed load. Here, when using a relatively thin rigid body (thin glass or the like) as the adherend, the press is preferably used. On the other hand, when an adhesive sheet is stuck to a curved surface of an adherend, a method of press-bonding with a finger or a method of press-bonding with a pressure jig having a shape corresponding to the curved surface is preferably used.

Next, the step [2] will be described.

The step [2] is a step of bringing the adhesive sheet-side surface of the laminated body into contact with the other adherend with a load in the range of 0.001 N/cm² to 10 N/cm². More specifically, the step [2] is a step in which the adhesive sheet-side surface of the laminated body produced in the step [1] is loaded against the other adherend in the range of 0.001 N/cm² to 10 N/cm². With the load in the above range, the sticking position can be adjusted while shifting the laminated body without bonding of the other adherend to the adhesive sheet.

The load in the step [2] is preferably in the range of 0.001 N/cm² to 10 N/cm², more preferably in the range of 0.1 N/cm² to 7 N/cm², further preferably in the range of 0.1 N/cm² to 3 N/cm². The load is particularly preferably in the range of 0.1 N/cm² to 1.5 N/cm² so that the sticking position can be adjusted while shifting the laminated body without bonding of the other adherend to the adhesive sheet.

The step [2] can be performed in any temperature environment, but is preferably performed in the temperature range of the assumed operation environment without any need of heating or the like which may be employed in conventional thermoplastic adhesive sheets. Specifically, the step [2] is preferably performed at a temperature in the range of - 5°C to 40°C, and more preferably in the range of 0°C to 35°C.

In the step [2], the time during which the adherend is allowed in contact with the adhesive sheet with a load in the above range may be appropriately set in the operation process.

Next, the step [3] will be described.

The step [3] is a step of moving the laminated body along the surface of the other adherend while applying a load in the range of 0.001 N/cm² to 10 N/cm².

The load applied in the step [3] is preferably in the range of 0.001 N/cm² to 10 N/cm², more preferably in the range of 0.1 N/cm² to 7 N/cm², further preferably in the range of 0.1 N/cm² to 3 N/cm2. The load is particularly preferably in the range of 0.1 N/cm² to 1.5 N/cm² so that, when the sticking position is adjusted while moving and shifting the laminated body, the position adjustment can be easily achieved without bonding of the adhesive sheet and the other adhesive sheet at an unwanted position.

The step [3] can be performed in any temperature environment, but is preferably performed in the temperature range of the assumed operation environment without any need of heating or the like which may be employed in conventional thermoplastic adhesive sheets. Specifically, the step [3] is preferably performed at a temperature in the range of-5°C to 40°C, and more preferably in the range of 0°C to 35°C.

In the step [3], the time during which the adherend is allowed to be in contact with the adhesive sheet with a load in the above range may be appropriately set in the operation process.

Next, the step [4] will be described.

The step [4] is a method of fixing the laminated body and the other adherend by press-bonding them with a load that is twice or more the load applied in the step [3].

The load in the step [4] is preferably 2.5 times or more, more preferably 5 times or more, further preferably 10 times or more the load applied in the step [3]. The load is particularly preferably 20 times or more the load applied in the step [3] so that the laminated body and the other adherend can be brought into a sufficiently close contact and fixed.

The load in the step [4] is preferably in the range of 5 N/cm² to 500 N/cm², more preferably in the range of 12 N/cm² to 200 N/cm². The load is particularly preferably in the range of 15 N/cm² to 150 N/cm² so that the other adherend and the adhesive sheet can be brought into a sufficiently close contact and fixed.

The step [4] can be performed in any temperature environment, but is preferably performed in the temperature range of the assumed operation environment without any need of heating or the like which may be employed in conventional thermoplastic adhesive sheets. Specifically, the step is preferably performed at a temperature in the range of -5°C to 40°C, and more preferably in the range of 0°C to 35°C.

In the step [4], the time during which the adherend is press-bonded to the adhesive sheet may be appropriately set in the operation process, but the load is preferably applied over 1 second or longer for temporarily fixing the article. On the other hand, since the time of loading is desirably not too long for increasing the production efficiency of the article, the time for press-bonding is preferably from 1 second to 30 seconds, more preferably from 3 seconds to 25 seconds, and further preferably from 5 seconds to 20 seconds.

In the step [4], examples of methods for press-bonding the adherend and the adhesive sheet include methods using a commercially available press, a finger pressure, a pressure roller, and a weight of a prescribed load. Here, when using a relatively thin rigid body (thin glass, or the like) as the adherend, a press is preferably used. On the other hand, when the adhesive sheet is stuck to a curved surface of an adherend, a method of press-bonding with a finger or a method of press-bonding with a pressure jig having a shape corresponding to the curved surface is preferably used.

Next, the adhesive sheet for use in the method for producing an article of the present invention will be described.

As the adhesive sheet for use in the present invention, a so-called substrate-less adhesive sheet composed of a single adhesive layer or an adhesive sheet that includes an adhesive layer directly or via another layer on one surface or both the surfaces of a support can be used. As the adhesive sheet, an adhesive sheet that includes the adhesive layer directly or via another layer on both the surfaces of a support is preferably used.

As the adhesive layer, an adhesive layer having a storage modulus G₂₃ at a frequency of 1 Hz and at 23°C in the range of 1.0 × 10⁴ Pa to 5.0 × 10⁶ Pa is preferably used, and the storage modulus G₂₃ is more preferably in the range of 7.0 × 10⁴ Pa to 3.0 × 10⁶ Pa, further preferably in the range of 1.0 × 10⁵ Pa to 3.0 × 10⁶ Pa, furthermore preferably in the range of 5.0 × 10⁵ Pa to 2.5 × 10⁶ Pa. The storage modulus G₂₃ is particularly preferably in the range of 1.0 × 10⁵ Pa to 2.3 × 10⁶ Pa so that, in the steps [1], [2], and [3], the position adjustment of the laminated body can be efficiently performed while after the step [4], a very high bonding strength is exhibited, and thus the adhesive layer can be suitably used for the position adjustment and adhesive fixing of the laminated body.

In addition, the adhesive layer preferably has a center-line average surface roughness Ra of the surface to be in contact with an adherend of 0.3 µm to 10.0 µm, more preferably 0.5 µm to 5.0 µm, further preferably in the range of 0.7 µm to 2.5 µm, furthermore preferably in the range of 1.0 µm to 2.3 µm. The center-line average surface roughness Ra is particularly preferably in the range of 1.5 µm to 2.2 µm so that, in the steps [1], [2], and [3], the position adjustment of the laminated body can be efficiently performed while after the step [4], a very high bonding strength is exhibited, and thus the adhesive layer can be suitably used for the position adjustment and adhesive fixing of the laminated body.

Note that the center-line surface average roughness Ra of the adhesive layer is determined as follows: the adhesive layer was subjected to a surface measurement in arbitrarily three portions (with a square area of 50 µm × 50 µm each) on the surface thereof using "Color 3D Laser Microscope VK-9500" manufactured by KEYENCE (lens magnification ×50, measurement mode: super-deep, pitch: 0.05 µm, optical zoom: ×1.0) three times, and the average of the measured values of center-line average surface roughness was taken as the center-line average surface roughness Ra of the adhesive layer on the surface to be in contact with an adherend.

As described above, an adhesive sheet having a specific storage modulus G₂₃ at 23°C and a specific center-line average surface roughness Ra can maintain, in the steps [1], [2], and [3], a state where the surface of the adherend is in contact only with the protrusions of the protrusions-and-depressions shape of the adhesive layer so that the position adjustment of the laminated body can be efficiently performed, while, after the step [4], a very high bonding strength is exhibited. Accordingly, such an adhesive sheet can be used in adhesive fixing.

On the other hand, with the above adhesive sheet, after the step [4], the protrusions-and-depressions shape of the adhesive layer is deformed and the adherend is bonded with the whole surface thereof. Accordingly, a very high bonding force can be exhibited.

As the adhesive layer, an adhesive layer having a so-called pressure sensitive adhesion (tackiness) at, for example, a normal temperature (approximately 25°C or lower) can be used.

As the adhesive layer, preferably used is an adhesive layer containing an adhesive component that contains a resin having a so-called pressure sensitive adhesion (tackiness) even at a normal temperature (approximately 25°C or lower) and that may contain a tackifying resin which can be used as needed and another additive or the like which is can be used as needed.

Examples of the adhesive components constituting the adhesive layer include natural rubber-based polymers, synthetic rubber-based polymers, acrylic polymers, silicone-based polymers, urethane-based polymers, and vinyl ether-based polymers. Among them, as the adhesive component, a synthetic rubber-based polymer or an acrylic polymer is preferably used.

As the synthetic rubber-based polymer, a styrene-based block copolymer is preferably used. The styrene-based block copolymer refers to a tri-block copolymer or a di-block copolymer having a polystyrene unit (a1) and polyolefin unit (a2), or a mixture thereof.

As the styrene-based block copolymer, for example, a polystyrene-poly(isopropylene) block copolymer, a polystyrene-poly(isopropylene) block-polystyrene copolymer, a polystyrene-poly(butadiene) block copolymer, a polystyrene-poly(butadiene) block-polystyrene copolymer, a polystyrene-poly(butadiene/butylene) block copolymer, a polystyrene-poly(butadiene/butylene) block-polystyrene copolymer, a polystyrene-poly(ethylene/propylene) block copolymer, a polystyrene-poly(ethylene/propylene) block-polystyrene copolymer, a polystyrene-poly(ethylene/butylene) block copolymer, a polystyrene-poly(ethylene/butylene) block-polystyrene copolymer, a polystyrene-poly(ethylene-ethylene/propylene) block copolymer, a polystyrene-poly(ethylene-ethylene/propylene) block-polystyrene copolymer, or the like can be used. Among them, as the styrene-based block copolymer, a block copolymer having a polystyrene unit (a1) and a polyisoprene unit (a2) is preferably used, a polystyrene-poly(isopropylene) block copolymer, a polystyrene-poly(butadiene) block copolymer, or a polystyrene-poly(butadiene) block-polystyrene copolymer is further preferably used.

As the acrylic polymer, a polymer of an acrylic monomer can be used. As the acrylic monomer, (meth)acrylic acid or a (meth)acrylic acid alkyl ester, such as 2-ethylhexyl (meth)acrylate or n-butyl (meth)acrylate, can be used.

Examples of the tackifying resins for the purpose of adjusting a high adhesion of an adhesive layer include a rosin-based tackifying resin, a polymerized rosin-based tackifying resin, a polymerized rosin ester-based tackifying resin, a rosin phenolic tackifying resin, a stabilized rosin ester-based tackifying resin, a disproportionated rosin ester-based tackifying resin, a terpene-based tackifying resin, a terpene phenolic tackifying resin, and a petroleum resin-based tackifying resin.

As the tackifying resin, among the above, a terpene phenolic tackifying resin is preferably used. As the terpene phenolic tackifying resin, among conventionally known copolymers of a terpene monomer and phenol, one having a softening point of 100°C to 125°C is preferably selected and used for increasing the compatibility with the rubber-based block copolymers and the like to thus impart high adhesion.

The terpene phenolic tackifying resin is preferably used in an amount in the range of 30 parts by mass to 120 parts by mass based on 100 parts by mass in total of the synthetic rubber-based polymer or acrylic polymer as the adhesive component, and for imparting further higher adhesion, the terpene phenolic tackifying resin is more preferably used in an amount in the range of 40 parts by mass to 100 parts by mass.

As the adhesive component, one containing, in addition to the above adhesive component, a crosslinking agent, another additive, or the like can be used, as needed.

As the crosslinking agent, for the purpose of increasing the cohesive power of the adhesive layer, a known isocyanate-based crosslinking agent, an epoxy-based crosslinking agent, an aziridine-based crosslinking agent, a polyvalent metal salt-based crosslinking agent, a metal chelate-based crosslinking agent, a keto-hydrazide-based crosslinking agent, an oxazoline-based crosslinking agent, a carbodiimide-based crosslinking agent, a silane-based crosslinking agent, a glycidyl(alkoxy)epoxy silane-based crosslinking agent, or the like can be used.

In the adhesive layer, in addition to the above-mentioned components, a foaming agent, a thermoexpandable balloon, an antioxidant, a plasticizer, a filler, a pigment, an ultraviolet absorber, an ultraviolet stabilizer, a flame proofing agent, a flame retardant, and the like can be used, as needed, to the extent that does not impair the effect of the present invention.

Examples of the supports include: films of organic resins, for example, polyester resins, such as polyethylene terephthalate, polybutylene terephthalate, and polyethylene naphthalate, polycarbonate, polyarylate, polyurethane, polyamide resins, such as polyamide and polyetheramide, polyimide resins, such as polyimide, polyetherimide, and polyamideimide, polysulfone resins, such as polysulfone and polyethersulfone, polyetherketone resins, such as polyetherketone and polyetheretherketone, polyphenylenesulfide, and modified polyphenyleneoxide; woven fabric or nonwoven fabric substrates containing organic fibers, such as cellulose fibers, polyester fibers, aramid fibers, and liquid crystal polymer fibers, or inorganic fibers, such as glass fibers, metal fibers, and carbon fiber; films, sheets, or plates of inorganic materials, such as glass plate and metal foils; and laminated bodies thereof.

In addition, as the support, a composite, such as glass fiber-reinforced plastic (GFRP), can be used.

In addition, in the support, for example, a woven fabric substrate or a nonwoven fabric substrate containing a glass fiber, a glass substrate containing a glass fiber composite or a glass plate, a polyamide-based resin film, or a polyimide-based resin film can be used as a substrate.

As the support, one having a corona-treated surface or one having a surface provided with a primer layer is preferably used so that the degree of close contact between the support and the adhesive layer can be enhanced.

In addition, as the support, a support having a communication hole can be used. As the support having a communication hole, the above-mentioned conventionally known various supports can be used, and, for example, a porous film including paper, a nonwoven fabric, the plastic film, etc., a metallic mesh, or a punching film can be used. A communication hole means one or a plurality of spatially-continuous openings that communicate a first surface with a second surface of a support.

In addition, as the support, when a thickness accuracy is required for the adhesive sheet, the plastic film is preferably used, and when a thickness difference between two members to be bonded is to be filled, a cushioning porous film is preferably used.

As the support, one having a thickness of 1 µm to 10 mm is preferably used, and the thickness is more preferably 50 µm to 9 mm, and particularly preferably 100 µm to 8 mm. In particular, for use in an in-vehicle display, the thickness is preferably 100 µm to 10 mm, more preferably 250 µm to 9 mm, and further preferably 400 µm to 8 mm. In addition, for use in a portable terminal apparatus, the thickness is preferably 20 µm to 1000 µm, more preferably 25 µm to 500 µm, and further preferably 25 µm to 300 µm.

As the adhesive sheet, for example, an adhesive sheet in which the adhesive layer provided on one surface of the support has a thickness of 25 µm or more is preferably used, and the thickness is more preferably 50 µm to 120 µm, and for obtaining an adhesive sheet that has a high cohesive power and exhibits a high bonding strength when pressed with a prescribed load, the thickness is further preferably 60 µm to 120 µm.

As the adhesive sheet, for example, an adhesive sheet in which the adhesive layers provided on both the surfaces of the support has a total thickness of 50 µm or more is preferably used, and the thickness is more preferably in the range of 50 µm to 300 µm, further preferably in the range of 100 µm to 250 µm, and for obtaining an adhesive sheet that has a high cohesive power and exhibits a high bonding strength when pressed with a prescribed load, the thickness is further preferably in the range of 100 µm to 210 µm.

The adhesive sheet can be produced by a transfer method in which a coating liquid (adhesive) containing the adhesive component is previously applied on a surface of a release liner using a roll coater or the like, and is dried to form an adhesive layer, and then, the pressure sensitive adhesive layer is stuck to one surface or both the surfaces of the support.

Regarding the form of the coating liquid (adhesive), a solvent type, an aqueous type, such as an emulsion-type pressure sensitive adhesive or a water-soluble pressure sensitive adhesive, and a nonsolvent type, such as a hotmelt pressure sensitive adhesive, a UV-curable pressure sensitive adhesive, and EB-curable pressure sensitive adhesive, are exemplified.

One example of a method for imparting a prescribed center-line average surface roughness Ra to a surface to be in contact with an adherend, of the adhesive layer is a method of using, as the release liner, a release liner having a center average surface roughness on a release-treated surface thereof preferably in the range of 0.3 µm to 3.0 µm, more preferably in the range of 0.5 µm to 2.8 µm, more preferably in the range of 0.7 µm to 2.5 µm, more preferably in the range of 1.0 µm to 2.3 µm, further preferably in the range of 1.5 µm to 2.2 µm. Specifically, a method is exemplified in which the coating liquid (adhesive) is applied on a release-treated surface of a release liner having a center average surface roughness in the above range, and is dried to form an adhesive layer, the adhesive layer is stuck to a surface of the support, as needed, and the release liner is removed.

By the above method, a center line surface roughness that is equal to, the same level as, or a slightly larger than the center average surface roughness of the release-treated surface is transferred to a surface of the adhesive layer.

As the release liner, the following can be used, for example: a resin film, such as polyethylene terephthalate, polyethylene, polypropylene, or an ethylene-propylene copolymer, a foamed film, a paper, such as Japanese paper, Western paper, or glassine paper, a nonwoven fabric, a metal foil, or a laminate film of a combination thereof that have a release-treated surface with a center-line average surface roughness in the above range.

The shape of the release-treated surface of the release liner can be imparted by subjecting a surface of the film to a sandblast treatment, or the like. Alternatively, the shape of the release-treated surface of the release liner can be achieved by using a film or the like obtained by forming a mixture of the resin with a matting material into a film.

In the method for producing an article of the present invention, the position adjustment of the laminated body can be efficiently achieved when the steps [1], [2], and [3] are performed, while, when the step [4] is performed, a very high bonding strength is exhibited. Accordingly, the method can be suitably used for position adjustment and adhesive fixing of members having an adherend that is thin and is liable to cause deformation, crack, and the like.

In the method for producing an article of the present invention, a liquid adhesive may be used together with the adhesive sheet. When a high bonding strength is required or when a gap having a large thickness difference is to be filled, not an adhesive sheet but a liquid adhesive is used for fixing members, but in the case of using a liquid adhesive, members have to be fixed by a jig and be kept until the liquid adhesive is solidified. Thus, by combining a liquid adhesive and the adhesive sheet and using the adhesive sheet for temporarily fixing in this production method, the jig fixing can be not required while enabling adjustment of the sticking position.

The step of applying a liquid adhesive on an adherend may be performed after any of the steps [1], [2], [3], and [4], or before the step [1], and the order can be selected according to the workability.

In the method for producing an article of the present invention, the adhesive sheet may be stuck to the entire surface of or a part of the surface of an adherend, or may be stuck, continuously to the peripheral part of an adherend in a frame form, or intermittently thereto with some disconnected parts. In addition, also when the adhesive sheet is used together with a liquid adhesive, the adhesive sheet can be stuck in the same manners as above. It is possible that the adhesive sheet is intermittently stuck while the liquid adhesive is applied on the disconnected parts (parts having no adhesive sheet stuck).

When the adhesive sheet is used together with a liquid adhesive, the area of the adhesive sheet stuck may be larger, or the area of the liquid adhesive applied may be larger.

Examples of the adherends include glass, a metal, such as aluminum, a plastic made of a resin, such as acryl or polycarbonate.

The method for producing an article of the present invention can be used for fixing between plane faces, between curved faces, and between a plane face and a curved face of adherends. Among them, the method can be suitably used for fixing between curved faces of adherends. In fixing between curved faces, sticking at a specific position is more difficult as compared with fixing between plane faces, and therefore the method for producing an article of the present invention in which the position adjustment can be efficiently achieved can be favorably used.

The curved faces may be faces having the same radius of curvature, or faces having different radii of curvature. The radius of curvature is preferably in the range of 0.1 mm to 10 m, more preferably 0.3 mm to 500 mm, and more preferably 0.5 mm to 100 mm.

Examples of the articles obtained by the production method of the present invention include an in-vehicle display having a polycarbonate decoration panel bonded to an image display and a portable terminal apparatus having an image display panel with a curved shape bonded to a housing with a curved shape.

### Examples

### <Adjustment of pressure sensitive adhesive>

### (Preparation Example 1)

A blend of 100 parts by mass of a styrene-butadiene block copolymer X having a weight average molecular weight of 300,000 (a mixture of a tri-block copolymer and a di-block copolymer, the proportion of the di-block copolymer based on the total amount of the mixture being 50% by mass, the proportion by mass of the polystyrene unit based on the entire styrene-butadiene block copolymer being 30% by mass, the proportion by mass of the polybutadiene unit being 70% by mass) and 65 parts by mass of a terpene phenolic tackifying resin (softening point: 115°C, number average molecular weight: 1000) was dissolved in 200 parts by mass of toluene to obtain an adhesive (a-1).

### (Preparation Example 2)

A blend of 100 parts by mass of a styrene-butadiene block copolymer X having a weight average molecular weight of 300,000 (a mixture of a tri-block copolymer and a di-block copolymer, the proportion of the di-block copolymer based on the total amount of the mixture being 50% by mass, the proportion by mass of the polystyrene unit based on the entire styrene-butadiene block copolymer being 30% by mass, the proportion by mass of the polybutadiene unit being 70% by mass) and 80 parts by mass of a terpene phenolic tackifying resin (softening point: 115°C, number average molecular weight: 1000) was dissolved in 200 parts by mass of toluene to obtain an adhesive (a-2).

**[Table 1]**

| | Adhesive (a-1) | Adhesive (a-2) |
|---|---|---|
| Styrene-butadiene block copolymer X [parts by mass] | 100 | 100 |
| Terpene phenolic tackifying resin [parts by mass] | 65 | 80 |
| Toluene [parts by mass] | 200 | 200 |

### <Production of adhesive tape>

### (Production Example 1)

The adhesive (a-1) was applied on a surface of a release liner having a center-line average surface roughness Ra of 1.63 µm using an applicator so as to give a thickness after drying of 88 µm, and was dried at 85°C for 5 minutes to form an adhesive layer. The adhesive layer was stuck to both the surfaces of a polyethylene terephthalate film having a thickness of 25 µm, and then a pressure of 40 N/cm² was applied to perform lamination, thereby obtaining an adhesive sheet 1.

### (Production Example 2)

The adhesive (a-2) was applied on a surface of a release liner having a center-line average surface roughness Ra of 1.63 µm using an applicator so as to give a thickness after drying of 88 µm, and was dried at 85°C for 5 minutes to form an adhesive layer. The adhesive layer was stuck to both the surfaces of a polyethylene terephthalate film having a thickness of 25 µm, and then a pressure of 40 N/cm² was applied to perform lamination, thereby obtaining an adhesive sheet 2.

### (Production Example 3)

An adhesive sheet 3 was obtained in the same manner as in the Production Example 1 except for using a polyethylene-based foam substrate having a thickness of 200 µm in place of the polyethylene terephthalate film having a thickness of 25 µm.

### (Production Example 4)

An adhesive sheet 4 was obtained in the same manner as in Production Example 1 except for using a release liner having a center-line average surface roughness Ra of 1.63 µm in place of the release liner having a center-line average surface roughness Ra of 0.55 µm, and using a polyethylene-based foam substrate having a thickness of 200 µm in place of the polyethylene terephthalate film having a thickness of 25 µm.

### (Example 1)

Under an environment of 23°C, the adhesive sheet 1 was cut into a frame form having a square shape with a length of one side (outer size) of 14 mm and having a width of 2 mm.

The release liner on one face of the cut adhesive sheet was peeled, and a transparent acrylic plate having a length of 15 mm, a width of 15 mm, a thickness of 1 mm, a weight of 0.5 g, and a radius of curvature of 380 mm and the adhesive sheet were stuck by applying a load of 50 N/cm² thereto for 10 seconds using a press, followed by releasing the pressed state. In this time, one side of the cut adhesive sheet was made to correspond to one 15 mm side of the transparent acrylic plate, and then the other release liner was peeled.

### (Step [1])

Next, under an environment of 23°C, a transparent acrylic plate having a length of 150 mm, a width of 70 mm, a thickness of 1 mm, and a radius of curvature of 380 mm and the adhesive sheet-side surface of the acrylic plate having the adhesive sheet stuck thereto were loaded for 1 second with such a force that a load of 1 N/cm² was applied to the adhesive sheet (step [2]).

Next, under an environment of 23°C, while applying a load with such a force that a load of 1 N/cm² was applied to the adhesive sheet, the laminated body of the transparent acrylic plate which is a cuboid having a length of 15 mm, a width of 15 mm, a thickness of 1 mm, and a weight of 0.5 g and the adhesive sheet was moved 5 mm, relative to the transparent acrylic plate which is a cuboid having a length of 150 mm, a width of 70 mm, and a thickness of 1 mm, in a horizontal direction with a forefinger at a rate of 5 m/min (step [3]).

After releasing the loaded state, the laminated body and the adhesive sheet were loaded with such a force that a load of 50 N/cm² was applied to the adhesive sheet with a press for 10 seconds (step [4]). Then, the loaded state was released to thereby obtain an article.

### (Example 2)

An article was obtained in the same manner as in Example 1 except for using the adhesive sheet 2 in place of the adhesive sheet 1.

### (Example 3)

An article was obtained in the same manner as in Example 1 except for using the adhesive sheet 3 in place of the adhesive sheet 1.

### (Example 4)

An article was obtained in the same manner as in Example 1 except for using the adhesive sheet 4 in place of the adhesive sheet 1.

### (Example 5)

Under an environment of 23°C, the adhesive sheet 1 was cut into a frame form having a square shape with a length of one side (outer size) of 14 mm and having a width of 2 mm.

The release liner on one face of the cut adhesive sheet was peeled, and a transparent acrylic plate having a length of 15 mm, a width of 15 mm, a thickness of 1 mm, a weight of 0.5 g, and a radius of curvature of 37 mm and the adhesive sheet were stuck by applying a load of 50 N/cm² for 10 seconds using a press, followed by releasing the pressed state. In this time, one side of the cut adhesive sheet was made to correspond to one 15 mm side of the transparent acrylic plate, and then the other release liner was peeled. (step [1])

Next, under an environment of 23°C, a transparent acrylic plate having a length of 150 mm, a width of 70 mm, a thickness of 1 mm, and a radius of curvature of 37 mm and the adhesive sheet-side surface of the acrylic plate having the adhesive sheet stuck thereto were loaded for 1 second with such a force that a load of 1 N/cm² was applied to the adhesive sheet (step [2]).

Next, under an environment of 23°C, while applying a load with such a force that a load of 1 N/cm² was applied to the adhesive sheet, the laminated body of the transparent acrylic plate which is a cuboid having a length of 15 mm, a width of 15 mm, a thickness of 1 mm, and a weight of 0.5 g and the adhesive sheet was moved 5 mm, relative to the transparent acrylic plate having a length of 150 mm, a width of 70 mm, a thickness of 1 mm, and a radius of curvature of 37 mm, in a horizontal direction with a forefinger at a rate of 5 m/min (step [3]).

After releasing the loaded state, the laminated body and the adhesive sheet were loaded with such a force that a load of 50 N/cm² was applied to the adhesive sheet with a press for 10 seconds (step [4]). Then, the loaded state was released to thereby obtain an article.

### (Example 6)

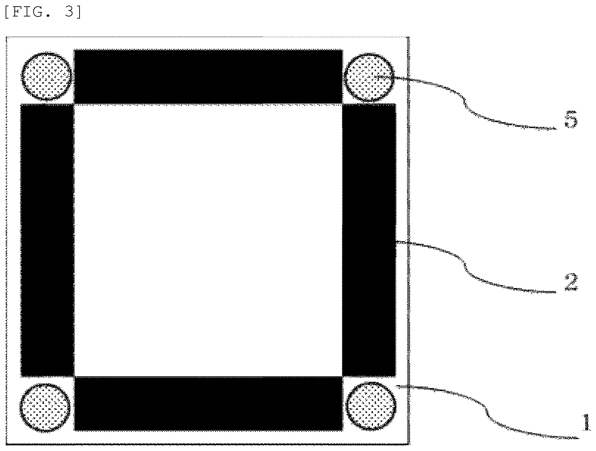

Under an environment of 23°C, the adhesive sheet 1 was cut into four strips having a length of one side (outer size) of 10 mm and a width of 2 mm. The release liner on one face of each of the cut adhesive sheets was peeled, and a transparent acrylic plate having a length of 15 mm, a width of 15 mm, a thickness of 1 mm, a weight of 0.5 g, and a radius of curvature of 380 mm and the adhesive sheet were stuck as shown in Fig. 3 by applying a load of 50 N/cm² thereto for 10 seconds using a press, followed by peeling the other release liner. (step [1])

Next, as shown in Fig. 3, under an environment of 23°C, 0.25 mg of a liquid adhesive (product name: Aronalpha, manufactured by Toagosei, Co. Ltd.) was applied to each of four portions having no adhesive sheet stuck.

Next, under an environment of 23°C, the transparent acrylic plate having a length of 150 mm, a width of 70 mm, a thickness of 1 mm, and a radius of curvature of 380 mm and the adhesive sheet-side surface of the acrylic plate having the adhesive sheet stuck thereto were loaded for 1 second with such a force that a load of 1 N/cm² was applied to the adhesive sheet (step [2]).

Next, under an environment of 23°C, while applying a load with such a force that a load of 1 N/cm² was applied to the adhesive sheet, the laminated body of the transparent acrylic plate which is a cuboid having a length of 15 mm, a width of 15 mm, a thickness of 1 mm, and a weight of 0.5 g and the adhesive sheet was moved 5 mm, relative to the transparent acrylic plate which is a cuboid having a length of 150 mm, a width of 70 mm, and a thickness of 1 mm, in a horizontal direction with a forefinger at a rate of 5 m/min (step [3]).

After releasing the loaded state, the laminated body and the adhesive sheet were loaded with such a force that a load of 50 N/cm² was applied to the adhesive sheet with a press for 10 seconds (step [4]). Then, the loaded state was released to thereby obtain an article.

### (Comparative Example 1)

An article was produced in the same manner as in Example 1 except for changing the loads in the step [2] and the step [3] from 1 N/cm² to 20 N/cm².

### (Comparative Example 2)

An article was produced in the same manner as in Example 1 except for changing the load in the step [4] from 50 N/cm² to 1 N/cm².

### [Method for measuring center-line average surface roughness Ra of adhesive layer on the surface in contact with adherend]

The release liner laminated on the adhesive layer constituting the adhesive sheet obtained in each of the Production Examples was peeled and the center-line average surface roughness Ra of the adhesive layer to be in contact with an adherend was measured by the following method.

The adhesive layer were subjected to a surface measurement in arbitrary three portions (with a square area of 50 µm × 50 µm each) on the surface thereof using "Color 3D Laser Microscope VK-9500" manufactured by KEYENCE (lens magnification ×50, measurement mode: super deep, pitch: 0.05 µm, optical zoom: ×1.0) to measure the values of center-line average surface roughness Ra thereof. The average of the values of center-line average surface roughness Ra of the three points obtained by the above measurement was taken as the center-line average surface roughness Ra of the adhesive layer on the surface to be in contact with an adherend.

### [Measurement of dynamic viscoelasticity of adhesive layer]

The adhesive used in production of the adhesive sheet obtained in each of the Production Examples was applied on a surface of a release liner using an applicator so as to give a thickness after drying of 100 µm and was dried at 85°C for 5 minutes to form a plurality of adhesive layers each having a thickness of 100 µm.

The adhesive layers obtained above were stacked to produce a test piece having a thickness of 2 mm composed of the adhesive layers.

Parallel plates having a diameter of 7.9 mm were mounted on a viscoelasticity analyzer (ARES 2kSTD) manufactured by TA Instruments Japan. The test piece was interposed between the parallel plates with a pressure load of 40 to 60 g, and the storage modulus at 23°C was measured under conditions of a frequency of 1Hz, a temperature range of -60 to 150°C, and a rate of temperature rise of 2°C/min.

### [Position adjustability in step [3]]

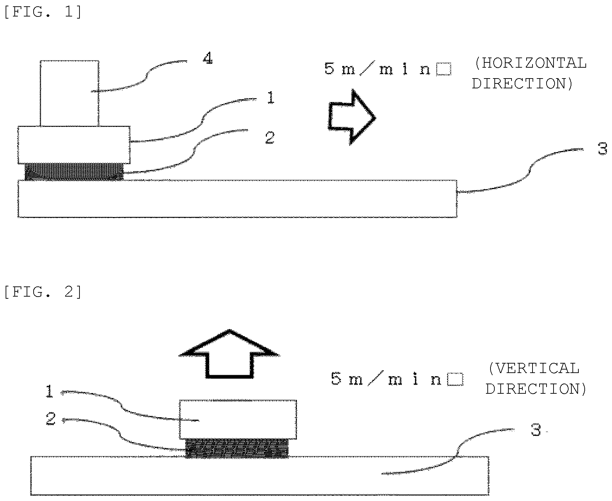

As shown in Fig. 1, in the step [3] described in Examples and Comparative Examples, the acrylic plate and the adhesive sheet were moved 20 mm, relative to the lower acrylic plate, in a horizontal direction with a forefinger at a rate of 5 m/min while applying the load to thereby evaluate the position adjustability. The above position adjustability test was performed 10 times to evaluate the position adjustability under the following criteria.

○: The adhesive sheet could slide without being caught by the acrylic plate.
Δ: The adhesive sheet could slide while being caught by the acrylic plate.
×: The adhesive sheet bonded to the acrylic plate and could not slide.

### [Adhesion in step [4]]

As shown in Fig. 2, for the article after the step [4] described in Examples and Comparative Examples, the transparent acrylic plate which was a cuboid having a length of 15 mm, a width of 15 mm, a thickness of 1 mm, and a weight of 0.5 g was taken with a forefinger and a thumb and was pulled in the vertical direction at a rate of 5 m/min while holding the transparent acrylic plate which was a cuboid having a length of 150 mm, a width of 70 mm, and a thickness of 1 mm with the other hand to thus evaluate the tensile adhesion. The above adhesion test was performed 10 times to evaluate the adhesion under the following criteria.

○: The adhesive sheet and the acrylic plate were sufficiently bonded and could not be peeled off.
×: The adhesive sheet and the acrylic plate were not bonded and could be peeled off.

**[Table 2]**

| | | | Example 1 | Example 2 | Example 3 | Example 4 | Example 5 | Example 6 |
|---|---|---|---|---|---|---|---|---|
| Composition and thickness of layers constituting adhesive sheet | Adhesive layer | [Composition] | a-1 | a-2 | a-1 | a-1 | a-1 | a-1 |
| | | [Thickness] | 88 µm | 88 µm | 88 µm | 88 µm | 88 µm | |
| | Support | [Composition] | PET | PET | PE-based foam | PE-based foam | PET | PET |
| | | [Thickness] | 25 µm | 25 µm | 200 µm | 200 µm | 25 µm | 25 µm |
| | Adhesive layer | [Composition] | a-1 | a-2 | a-1 | a-1 | a-1 | a-1 |
| | | [Thickness] | 88 µm | 88 µm | 88 µm | 88 µm | 88 µm | 88 µm |
| Center-line average surface roughness Ra of adhesive layer | | [µm] | 2.01 | 1. 99 | 2.01 | 0.73 | 2.01 | 2.01 |
| Storage modulus at 23°C of adhesive layer | | [Pa] | 1.20E+06 | 9.00E+05 | 1.20E+06 | 1.20E+06 | 1.20E+06 | 1.20E+06 |
| Radius of curvature of adherend | | [mm] | 3.80E+02 | 3.80E+02 | 3.80E+02 | 3.80E+02 | 3.70E+01 | 3.80E+02 |
| Radius of curvature of the other adherend | | [mm] | 3.80E+02 | 3.80E+02 | 3.80E+02 | 3.80E+02 | 3.70E+01 | 3.80E+02 |
| Load in step [3] | | [N/cm²] | 1 | 1 | 1 | 1 | 1 | 1 |
| Load in step [4] | | [N/cm²] | 50 | 50 | 50 | 50 | 50 | 50 |
| Load in step [4]/load in step [3] | | [times] | 50 | 50 | 50 | 50 | 50 | 50 |
| Evaluation of article in press-bonding step [3] | Position adjustability | [-] | ○ | ○ | ○ | ○ | ○ | ○ |
| Evaluation of article in press-bonding step [4] | Adhesion | [-] | ○ | ○ | ○ | ○ | ○ | ○ |

**[Table 3]**

| | | | Comparative Example 1 | Comparative Example 2 |
|---|---|---|---|---|
| Composition and thickness of layers constituting adhesive sheet | Adhesive layer | [Composition ] | a-1 | a-1 |
| | | [Thickness] | 88 µm | 88 µm |
| | Support | [Composition ] | PET | PET |
| | | [Thickness] | 25 µm | 25 µm |
| | Adhesive layer | [Composition ] | a-1 | a-1 |
| | | [Thickness] | 88 µm | 88 µm |
| Center-line average surface roughness Ra of adhesive layer | | [µm] | 2.01 | 2.01 |
| Storage modulus at 23°C of adhesive layer | | [Pa] | 1.20E+06 | 1.20E+06 |
| Radius of curvature of adherend | | [mm] | 3.80E+02 | 3.80E+02 |
| Radius of curvature of the other adherend | | [mm] | 3.80E+02 | 3.80E+02 |
| Load in step [3] | | [N/cm²] | 20 | 1 |
| Load in step [4] | | [N/cm²] | 50 | 1 |
| Load in step [4]/load in step [3] | | [times] | 2.5 | 1 |
| Evaluation of article in press-bonding step [3] | Position adjustabilit y | [-] | × | ○ |
| Evaluation of article in press-bonding step [4] | Adhesion | [-] | - | × |

### Reference Signs List

- 1:: Transparent acrylic plate 15 mm × 15 mm
- 2:: Cut adhesive sheet
- 3:: Transparent acrylic plate 150 mm × 70 mm
- 4:: Load
- 5:: Liquid adhesive

## Claims

1. A method for producing an article, the article having a structure in which two or more adherends are bonded via an adhesive sheet, the method comprising:
a step [1] of sticking an adhesive sheet to one adherend to produce a laminated body;
a step [2] of bringing an adhesive sheet-side surface of the laminated body into contact with the other adherend with a load in the range of 0.001 N/cm² to 10 N/cm²;
a step [3] of moving the laminated body along a surface of the other adherend while applying a load in the range of 0.001 N/cm² to 10 N/cm², and;
a step [4] of press-bonding the laminated body to the other adherend with a load that is twice or more the load applied in the step [3].

2. The method for producing an article according to claim 1, wherein surfaces of the one adherend and the other adherend each have a radius of curvature of 0.1 mm to 10 m.

3. The method for producing an article according to claim 1 or 2, wherein the adhesive sheet has an adhesive layer, and a surface of the adhesive layer to be in contact with the other adherend in the step [1] has a center-line average surface roughness Ra in the range of 0.2 µm to 20.0 µm.

4. The method for producing an article according to any one of claims 1 to 3, wherein the adhesive layer has a storage modulus at 23°C in the range of 1 × 10⁴ Pa to 5 × 10⁶ Pa.

5. An electronic device produced by the production method according to any one of claims 1 to 4.
